# EUROPÄISCHE PATENTANMELDUNG

(11) **EP 1 887 802 A1**
(43) Veröffentlichungstag der Anmeldung: **13.02.2008**
(21) Anmeldenummer: 06016284.9
(22) Anmeldetag: 03.08.2006
(51) Int. Cl.: H04N 7/24, H04N 7/173, H04N 5/00, H04N 5/44

(54) **Verfahren zur Umschaltung zwischen digitalen komprimierten Videoströmen**

(71) Anmelder: Nokia Siemens Networks GmbH & Co. KG, 81541 München (DE)
(72) Erfinder: Vindeby, Per, 81739 München (DE)

(57) **Zusammenfassung**

Die Erfindung betrifft ein Verfahren zur Umschaltung von Videoinhalten eines ersten Kanals zu Videoinhalten eines zweiten Kanals. Videoinhalte des ersten Kanals werden von einem ersten Videoencoder als Folge von I-Frame und von P-Frame zu einem Streamingserver übertragen. Entsprechend werden Videoinhalte des zweiten Kanals von einem zweiten Videoencoder als Folge von I-Frame und von P-Frame zum Streamingserver übertragen. Von einem Teilnehmer angeforderte Videoinhalte eines gewünschten Kanals werden als eine Folge von I-Frame und von P-Frame in einem kontinuierlichen Datenstrom vom Streamingserver zu einem Teilnehmerendgerät übertragen.

Bei einer Umschaltung von Videoinhalten des ersten Kanals auf Videoinhalte des zweiten Kanals wird seitens des Teilnehmerendgeräts ein Steuersignal gebildet. Durch das Steuersignal wird eine Bildung eines neuen I-Frame veranlasst, der als Videoinhalt des zweiten Kanals über den kontinuierlichen Datenstrom zum Teilnehmerendgerät gelangt. Das Teilnehmerendgerät schaltet beim Empfang des neuen I-Frame auf die Videoinhalte des zweiten Kanals für eine Darstellung um.

## Beschreibung

Die Erfindung betrifft ein Verfahren zur Umschaltung von Videoinhalten eines ersten Kanals zu Videoinhalten eines zweiten Kanals gemäß dem Oberbegriff des Patentanspruchs 1.

Multimediadaten werden in Form eines kontinuierlichen Datenstroms unter Verwendung von so genannten "Streaming"-Übertragungsverfahren zu einem Teilnehmerendgerät bzw. zu mehreren Teilnehmerendgeräten übertragen, um dort wiedergegeben zu werden.

Beispielsweise werden Hörfunksendungen oder Videofilme mittels Streaming-Technologie über das Internet an Endgeräte übertragen oder es wird eine Datenstromübertragung über ein Mobilfunknetz oder ein Festnetz zu einem Teilnehmerendgerät durchgeführt - beispielsweise unter Verwendung von GPRS-, UMTS-, WLAN- oder von DSL-Übertragungsverfahren.

Streamingverfahren werden zunehmend eingesetzt, um Datenströme von Live-Veranstaltungen oder von Web-Cam's zu einem Teilnehmerendgerät in Echtzeit zu übertragen.

Beim Streaming werden Multimediadaten bzw. Inhalte von Kanälen über einen so genannte "Encoder" zu einem "Streaming-Server" übertragen, der aus übertragenen Inhalten verschiedener Kanäle je nach Auswahl bzw. Anforderung durch das Teilnehmerendgerät einen kontinuierlichen Datenstrom bildet und diesen in Echtzeit an das Teilnehmerendgerät zur Darstellung überträgt.

Der Encoder, der einem betrachteten Kanal zuordenbar ist, wird dazu verwendet, um Inhalte des zugeordneten Kanals - beispielsweise Videosequenzen - zu codieren und diese in einem vorgebenden Format an den Streaming-Server zu übertragen.

Seitens des Streaming-Servers liegen somit Inhalte mehrerer Kanäle vor - so stehen beispielsweise unterschiedliche Fernsehprogramme bzw. -sendungen, Sportübertragungen, Nachrichtensendungen, Kinofilme, Werbetrailer bzw. Musik zur Verfügung.

Insbesondere zur Qualitätsoptimierung von komprimiert erfolgenden Videoübertragungen werden bei der Datenstromübertragung üblicherweise zwei unterschiedliche Rahmentypen verwendet.

Ein erster Rahmentyp wird als "Intraframe" oder "I-Frame" bzw. "Key-Frame" bezeichnet. Ein derartiger I-Frame beinhaltet komplette Informationen einer Bildszene bzw. komplette Informationen eines einzelnen Bildes. Dadurch ist eine von vorhergehenden Bildern unabhängige Bilddarstellung möglich. Ein Ausfall eines vorhergehenden Bildes auf die Darstellung eines nachfolgenden Bildes hat keinerlei Auswirkungen.

Ein zweiter Rahmentyp wird als "Predicted Frame" oder als "P-Frame" bzw. "Delta-Frame" bezeichnet. Ein P-Frame beinhaltet lediglich Informationen über Unterschiede von aufeinanderfolgenden Bildern, die sogenannten Bildwechsel-Informationen. Durch die Übertragung von P-Frame ist es möglich, Datenstrom-Übertragungen mit einer geringen Bandbreite zu realisieren.

Fällt bei einer P-Frame-Übertragung ein vorhergehendes Bild aus, so kann das darauf nachfolgende Bild nicht unmittelbar dargestellt werden bzw. werden Störungen im nachfolgenden Bild verursacht.

Typischerweise werden I-Frames übertragen, wenn größere Änderungen innerhalb einer Bildfolge bzw. wenn größere Änderungen bezüglich des Bildinformationsgehalts zwischen aufeinanderfolgenden Bildern gegeben sind.

Entsprechend werden P-Frames übertragen, wenn innerhalb einer Bildfolge lediglich kleinere Änderungen gegeben sind.

Zur Kompensierung von möglichen Übertragungsfehlern werden die I-Frames typischerweise mit einer Periode von ca. 10 Sekunden übertragen.

Bei einer Umschaltung von Inhalten eines ersten Kanals zu Inhalten eines zweiten Kanals bei einer komprimiert erfolgenden Videoübertragung ist es somit notwendig, den I-Frame des zweiten Kanals zu detektieren: Beginnend ab diesem I-Frame ist dann die Bilddarstellung des zweiten Kanals am Teilnehmerendgerät möglich. Würde eine Bilddarstellung unmittelbar nach der Umschaltung bei einem P-Frame beginnen, so würde lediglich ein so genanntes "blurry picture" dargestellt werden.

Da die I-Frames mit relativ großen Pausen - typischerweise mit den oben genannten 10 Sekunden - übertragen werden, müsste ein Teilnehmer bis zu 10 Sekunden warten, um Bilder des gewünschten zweiten Kanals ansehen zu können.

Es ist daher Aufgabe der vorliegenden Erfindung, bei einer kontinuierlichen Datenstromübertragung, bei der Videoinhalte eines ersten Kanals als I-Frame und P-Frame zu einem Teilnehmerendgerät übertragen werden, ein beschleunigtes Verfahren zur Umschaltung auf Inhalte eines zweiten Kanals anzugeben, wobei auch die Videoinhalte des zweiten Kanals als I-Frame und P-Frame übertragen werden.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren zur Umschaltung von Videoinhalten eines ersten Kanals zu Videoinhalten eines zweiten Kanals werden Videoinhalte des ersten Kanals von einem ersten Videoencoder als Folge von I-Frame und von P-Frame zu einem Streamingserver übertragen.

Entsprechend werden Videoinhalte des zweiten Kanals von einem zweiten Videoencoder als Folge von I-Frame und von P-Frame zum Streamingserver übertragen.

Von einem Teilnehmer angeforderte Videoinhalte eines gewünschten Kanals werden als eine Folge von I-Frame und von P-Frame in einem kontinuierlichen Datenstrom vom Streaming-server zu einem Teilnehmerendgerät übertragen.

Beim Starten eines neuen Kanals bzw. bei einer Umschaltung von Videoinhalten des ersten Kanals auf Videoinhalte des neuen, zweiten Kanals wird erfindungsgemäß seitens des Teilnehmerendgeräts ein Steuersignal gebildet.

Durch das Steuersignal wird eine Bildung eines neuen I-Frame veranlasst, der als Videoinhalt des zweiten Kanals über den kontinuierlichen Datenstrom zum Teilnehmerendgerät gelangt. Das Teilnehmerendgerät zeigt beim Empfang des neuen I-Frame die Videoinhalte des zweiten Kanals für eine unmittelbare Darstellung an.

Durch das Steuersignal wird beispielsweise beim zweiten Videoencoder eine Bildung eines I-Frame erzwungen, der als neuer I-Frame über den kontinuierlichen Datenstrom zum Teilnehmerendgerät gelangt. Das Teilnehmerendgerät zeigt beim Empfang des neuen I-Frame die Videoinhalte des zweiten Kanals für eine unmittelbare Darstellung an.

Alternativ dazu werden in einem Pufferspeicher des Streaming-server ein zuletzt übertragener I-Frame sowie diesem nachfolgende P-Frame, die durch den zweiten Videoencoder an den Streamingserver übertragen wurden, zwischengespeichert.

Die zwischengespeicherten I- und P-Frame beinhalten alle notwendigen Informationen für ein aktualisiertes Vollbild und sind zu einem neuen I-Frame zusammenfassbar.

Durch das Steuersignal wird der aktualisiert und neu gebildete I-Frame als Vollbild-Information an das Teilnehmerendgerät übertragen, wobei das Teilnehmerendgerät diesen I-Frame zur unmittelbaren Darstellung des neuen Kanals verwendet.

Durch das erfindungsgemäße Verfahren ist es möglich, die benötigte Startzeit eines neuen Kanals, z.B. bei Kanalumschaltung, wesentlich zu verringern.

Eine Bilddarstellung seitens des Teilnehmerendgeräts kann sofort nach Empfang des kontrolliert erzeugten bzw. erzwungenen I-Frame erfolgen.

Das erfindungsgemäße Verfahren ist mit geringem Aufwand an zusätzlicher Hardware implementierbar.

Nachfolgend wird die Erfindung anhand einer Zeichnung näher erläutert. Dabei zeigt:
- FIG 1: eine erste Alternative des erfindungsgemäßen Verfahrens anhand eines Blockschaltbilds,
- FIG 2: mit Bezug auf FIG 1 eine vorteilhafte Weiterbildung der ersten Alternative, und
- FIG 3: eine zweite Alternative des erfindungsgemäßen Verfahrens anhand eines Blockschaltbilds.

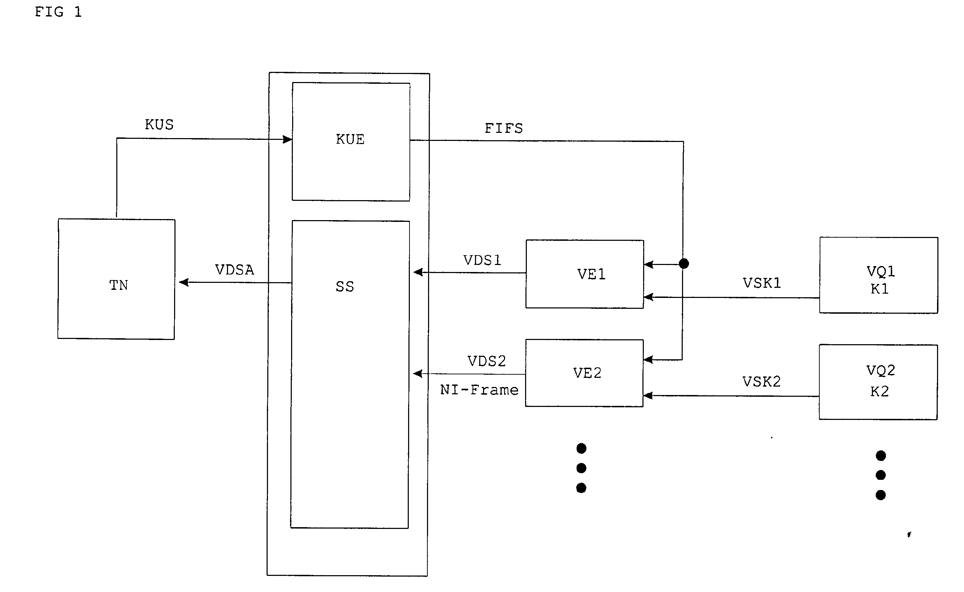

FIG 1 zeigt eine erste Alternative des erfindungsgemäßen Verfahrens anhand eines Blockschaltbilds.

Eine erste Videoquelle VQ1 liefert ein erstes Videosignal VSK1 eines ersten Kanals K1 an einen ersten Videoencoder VE1, der dem ersten Kanal K1 zugeordnet ist.

Der erste Videoencoder VE1 codiert das erste Videosignal VSK1 und überträgt es als erstes Videodatensignal VDS1 unter Verwendung einer Folge von aufeinanderfolgenden I-Frame und P-Frame an einen Streamingserver SS.

Entsprechend liefert eine zweite Videoquelle VQ2 ein zweites Videosignal VSK2 eines zweiten Kanals K2 an einen zweiten Video-Encoder VE2, der dem zweiten Kanal K2 zugeordnet ist.

Der zweite Videoencoder VE2 codiert das zweite Videosignal VSK2 und überträgt es als zweites Videodatensignal VDS2 unter Verwendung einer Folge von aufeinanderfolgenden I-Frame und P-Frame an den Streamingserver SS.

Der Streamingserver SS bildet, gesteuert durch ein Teilnehmerendgerät TN, einen angeforderten Videodatenstrom VDSA.

Je nach Übertragung des Videodatenstroms VDSA können auch mehrere Teilnehmerendgeräte gleichzeitig den gleichen Kanal empfangen.

Beispielsweise beinhaltet der angeforderte Videodatenstrom VDSA die I-Frame und die P-Frame des ersten Videodatensignals VDS1 des ersten Kanals K1. Der Streamingserver SS bildet somit eine Art Programm-Quelle, die Inhalte einer Vielzahl von Kanälen K1, K2, ..., bzw. von Videodatensignalen VDS1, VDS2, ... für eine vom Teilnehmer angeforderte Datenstromübertragung bereithält.

Der Streamingserver SS sendet beispielsweise angeforderte Inhalte des gewünschten Kanals K1 als angeforderten Videodatenstrom VDSA an das Teilnehmerendgerät TN.

Fordert ein Teilnehmer über das Teilnehmerendgerät TN einen neuen Kanal an, zum Beispiel beim Umschalten von den Videoinhalten des ersten Kanals K1 zu Videoinhalten des zweiten Kanals K2, so wird seitens des Teilnehmerendgeräts TN ein Kanalumschaltsignal KUS gebildet und an eine Kanalumschalteinrichtung KUE gesendet.

Die Kanalumschalteinrichtung KUE ist vorteilhafterweise beim Streamingserver SS angeordnet, da dieser aus den Videoinhalten des gewünschten Kanals K2 den angeforderten Videodatenstrom zusammenstellt.

Die Kanalumschalteinrichtung KUE bildet, initialisiert durch das Kanalumschaltsignal KUS, ein Steuersignal FIFS ("Force I-Frame Signal, FIFS), das aufgrund der angeforderten Umschaltung auf die Videoinhalte des zweiten Kanals K2 an den zweiten Videoencoder VE2 gelangt.

Vorteilhafterweise wird das Steuersignal FIFS über einen API-Eingang dem zweiten Videoencoder VE2 zugeführt.

Durch das Steuersignal FIFS wird beim zweiten Videoencoder VE2 eine Bildung eines I-Frame erzwungen, der als neuer I-Frame NI-Frame als Teil des zweiten Videodatensignals VDS2 an den Streamingserver SS und von diesem als Teil des angeforderten Videodatensignals VDSA an das Teilnehmerendgerät TN gelangt.

Beim Empfang des erzwungen, neuen I-Frame NI-Frame seitens des Teilnehmerendgeräts TN kann somit eine schnelle Umschaltung auf die Videoinhalte des zweiten Kanals K2 durchgeführt werden, eine Darstellung des eingangs beschriebenen "blurry picture" wird durch das erfindungsgemäße Verfahren vermieden.

Sinngemäß gelangt das Steuersignal FIFS für eine gewünschte Umschaltung von Videoinhalten des zweiten Kanals K2 auf Videoinhalte des ersten Kanals K1 an den ersten Videoencoder VE1.

Entsprechendes gilt, wenn - wie in FIG 1 durch Punkte dargestellt - neben dem ersten Kanal K1 und dem zweiten Kanal K2 weitere, hier nicht näher bezeichnete Kanäle, zur Auswahl zur Verfügung stehen.

Gleichzeitig zur Übertragung des Steuersignals FIFS werden seitens der Kanalumschalteinrichtung KUE bzw. des Streaming-servers SS Videoinhalte des gewünschten Kanals K2 ausgewählt.

Diese Auswahl kann beispielsweise auf einem Multiplex-Videodatenstrom basieren, wobei einzelne Datenströme seitens des Streamingserver SS bereitgestellt werden. Dadurch kann eine einfache Videodatenstrom-Umschaltung erfolgen.

Alternativ dazu könnten seitens des Streamingserver SS neue Videoinhalte des ausgewählten Videoencoders VE2 angefordert werden.

Die Steuerung der Umschaltung zwischen den Videoinhalten beim Streamingserver SS erfolgt vorteilhafterweise durch das Teilnehmerendgerät TN oder durch die Kanalumschalteinrichtung KUE.

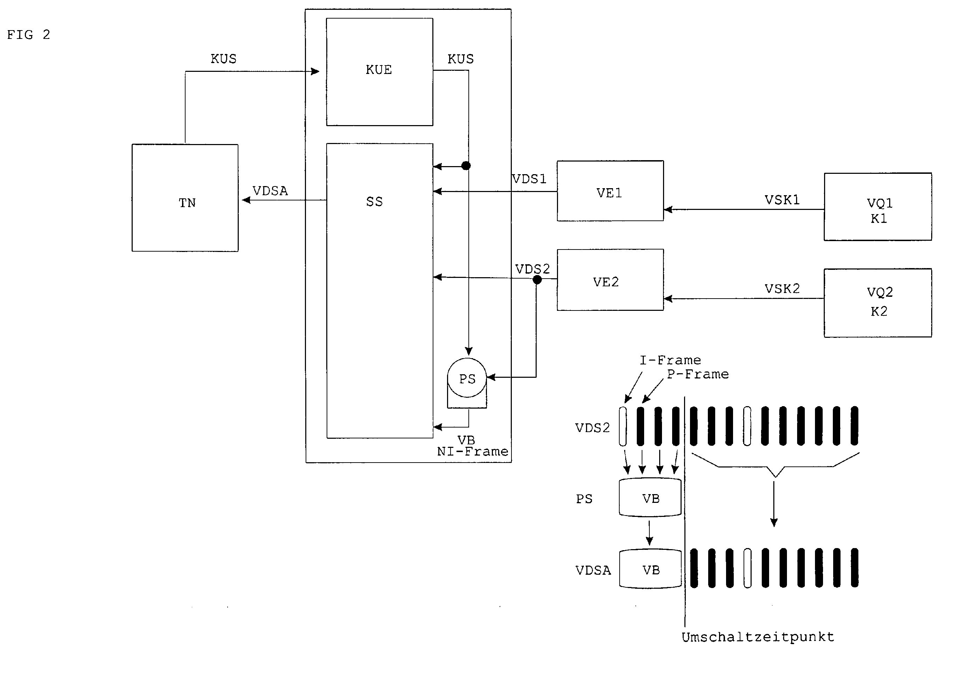

FIG 2 zeigt mit Bezug auf FIG 1 eine vorteilhafte Weiterbildung der ersten Alternative.

Dabei werden vorteilhafterweise Pufferspeicher PS dazu verwendet, um zumindest übertragene I-Frames wie nachfolgend beschrieben zwischenzuspeichern.

Jedem einzelnen der Videoencoder VE1, VE2, ..., kann dabei jeweils ein Pufferspeicher PS individuell zugeordnet sein. Die Pufferspeicher selbst sind vorteilhafterweise Teil des Streamingserver SS oder zumindest dort angeordnet.

Nachfolgend wird beispielhaft vorausgesetzt, dass wieder das Starten eines neuen Kanals wie bei der Umschaltung von Videoinhalten des ersten Kanals K1 auf Videoinhalte des zweiten Kanals K2 gewünscht wird.

Im Pufferspeicher PS, der hier beispielhaft dem zweiten Videoencoder VE2 zugeordnet ist, wird das Videodatensignal VDS2 als I-Frame und P-Frame empfangen und diese zwischengespeichert.

Ein zuletzt übertragener I-Frame sowie diesem nachfolgende P-Frame beinhalten alle notwendigen Informationen für ein aktualisiertes Vollbild VB und sind zu einem neuen I-Frame NI-Frame zusammenfassbar.

Alternativ dazu ist es möglich, den zuletzt übertragenen I-Frame sowie diesem nachfolgende P-Frame des Videodatensignal VDS2 zu empfangen, zu dekodieren und als Vollbild VB zwischenzuspeichern.

Fordert der Teilnehmer über das Teilnehmerendgerät TN ein Umschalten von den Videoinhalten des ersten Kanals K1 zu Videoinhalten des zweiten Kanals K2, so wird seitens des Teilnehmerendgeräts TN das Kanalumschaltsignal KUS gebildet und an die Kanalumschalteinrichtung KUE gesendet.

Initialisiert durch das Kanalumschaltsignal KUS bzw. durch die Kanalumschalteinrichtung KUE wird entweder der neue I-Frame NI-Frame über den Streamingserver SS zum Teilnehmerendgerät TN übertragen oder es wird das im Pufferspeicher PS abgelegte Vollbild VB durch eine Encodierung in den neuen I-Frame NI-Frame umgewandelt und dieser über den Streaming-server SS zum Teilnehmerendgerät TN übertragen.

Das Teilnehmerendgerät TN kann dann unmittelbar mit dem neuen I-Frame NI-Frame den neuen Kanal darstellen.

Wird im Pufferspeicher PS ein nachfolgend übertragener, weiterer I-Frame des Videodatensignals VDS2 empfangen, können die dort zwischengespeicherten Informationen des Vollbilds VB wieder gelöscht und mit dem neuen I-Frame ersetzt werden.

Im weiteren Verlauf wird dann im Pufferspeicher PS das Videodatensignal VDS2 entweder als I-Frame und P-Frame oder als Vollbild VB zwischengespeichert, so das im Pufferspeicher stets aktualisierte Informationen eines Vollbilds vorliegen.

Wird seitens des Teilnehmers über das Teilnehmerendgerät TN genau dann ein Umschalten von Kanälen angefordert, zu dem ein aktueller I-Frame am Streamingserver SS bzw. am Pufferspeicher PS anliegt, so kann das Versenden des Vollbildes aus dem Zwischenspeicher entfallen.

Diese in FIG 2 beschriebene Ausgestaltung ist insbesondere dann von Vorteil, wenn eine Vielzahl an Teilnehmerendgeräten einen Datenstrom anfordern, der über den Pufferspeicher zwischengespeichert wird, da das zwischengespeicherte Vollbild VB für alle Teilnehmer gleichzeitig verwendet werden kann. Eine Abspeicherung von teilnehmerspezifischen Zuständen entfällt vorteilhaft.

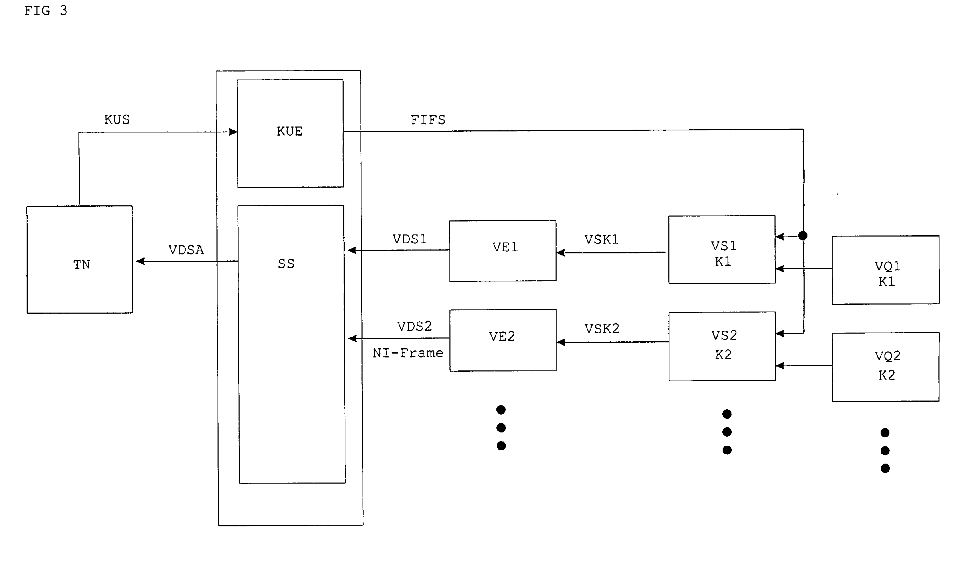

FIG 3 zeigt eine zweite Alternative des erfindungsgemäßen Verfahrens anhand eines weiteren Blockschaltbilds.

Hier wird davon ausgegangen, dass im Unterscheid zu FIG 1 die Videoencoder VE1, VE2, ... über keine Möglichkeit verfügen, das Steuersignal FIFS zu empfangen und auszuwerten und dass kein Pufferspeicher PS vorhanden ist.

In diesem Fall ist zwischen der ersten Videoquelle VQ1 und dem ersten Videoencoder VE1 eine erste Videosteuereinrichtung VS1 angeordnet, die beispielsweise als Videoscrambler ausgebildet ist.

Entsprechend ist zwischen der zweiten Videoquelle VQ2 und dem zweiten Videoencoder VE2 eine zweite Videosteuereinrichtung VS2 angeordnet, die ebenfalls als Videoscrambler ausgebildet sein kann.

Das Steuersignal FIFS gelangt bei einem angeforderten Wechsel von Videoinhalten des ersten Kanals K1 zu Videoinhalten des zweiten Kanals nun an die zweite Videosteuereinrichtung VS2 und beeinflusst dort das übertragene Videosignal VSK2 des zweiten Kanals K2 derart, dass seitens des zweiten Videoencoders VE2 ein neuer I-Frame NI-Frame erzwungen gebildet wird.

Beispielsweise könnte durch das Steuersignal FIFS innerhalb des Videosignals VSK2 bei aufeinanderfolgenden Bildern eine große Änderung erzeugt werden, um dadurch den neuen I-Frame NI-Frame zu erzwingen.

Im einfachsten Fall könnte durch das Steuersignal FIFS ein Bild oder mehrere Bilder innerhalb einer Bildfolge einfach unterdrückt werden, um ebenfalls beim zweiten Videoencoder VE2 die Bildung des neuen I-Frame zu erzwingen.

So könnte durch die Unterdrückung beispielsweise ein weißes oder ein schwarzes Bild innerhalb der Bildfolge gebildet werden.

Alternativ dazu könnte ein Bild einer Bildfolge durch ein Störsignal stark verzerrt werden, um eine große Änderung der Bildinhaltsinformation zwischen aufeinander folgenden Bildern der Bildfolge zu erzielen.

Sinngemäß gelangt das Steuersignal FIFS für eine gewünschte Umschaltung von Videoinhalten des zweiten Kanals K2 auf Videoinhalte des ersten Kanals K1 an die erste Videosteuereinrichtung VS1.

Entsprechendes gilt, wenn - wie in FIG 2 durch Punkte dargestellt - neben dem ersten Kanal K1 und dem zweiten Kanal K2 weitere, hier nicht näher bezeichnete Kanäle, zur Auswahl zur Verfügung stehen.

Die in den FIG 1 bis FIG 3 beschriebenen Ausgestaltungen können kanalabhängig auch miteinander kombiniert werden.

## Patentansprüche

1. Verfahren zur Umschaltung von Videoinhalten eines ersten Kanals (K1) zu Videoinhalten eines zweiten Kanals (K2),
- bei dem Videoinhalte des ersten Kanals (K1) von einem ersten Videoencoder (VE1) als Folge von I-Frame und von P-Frame zu einem Streamingserver (SS) übertragen werden,
- bei dem Videoinhalte des zweiten Kanals (K2) von einem zweiten Videoencoder (VE2) als Folge von I-Frame und von P-Frame zum Streamingserver (SS) übertragen werden,
- bei dem von einem Teilnehmer angeforderte Videoinhalte eines gewünschten Kanals (K1, K2) als eine Folge von I-Frame und von P-Frame in einem kontinuierlichen Datenstrom (VDSA) vom Streamingserver (SS) zu einem Teilnehmerendgerät (TN) übertragen werden,
**dadurch gekennzeichnet,**
- **dass** bei einer Umschaltung von Videoinhalten des ersten Kanals (K1) auf Videoinhalte des zweiten Kanals (K2) seitens des Teilnehmerendgeräts (TN) ein Steuersignal (KUS, FIFS) gebildet wird,
- **dass** durch das Steuersignal (KUS, FIFS) eine Bildung eines neuen I-Frame (NI-Frame) veranlasst wird, der als Videoinhalt des zweiten Kanals (K2) über den kontinuierlichen Datenstrom (VDSA) zum Teilnehmerendgerät (TN) gelangt, und
- **dass** das Teilnehmerendgerät (TN) beim Empfang des neuen I-Frame (NI-Frame) auf die Videoinhalte des zweiten Kanals (K2) für eine Darstellung umschaltet.

2. Verfahren nach Anspruch 1, **dadurch gekennzeichnet,**
- **dass** das Steuersignal (FIFS) über einen Eingang an den zweiten Videoencoder (VE2) übertragen wird,
- **dass** durch das Steuersignal (FIFS) die Bildung des neuen I-Frame (NI-Frame) am zweiten Videoencoder (VE2) erzwungen wird,
- **dass** der neue I-Frame (NI-Frame) über den kontinuierlichen Datenstrom (VDSA) zum Teilnehmerendgerät (TN) gelangt.

3. Verfahren nach Anspruch 1, **dadurch gekennzeichnet,**
- **dass** ein Videosignal (VSK2) einer Videoquelle (VQ2) des zweiten Kanals (K2) über eine Videosteuereinrichtung (VS2) an den zweiten Videoencoder (VE2) übertragen wird,
- **dass** das Steuersignal (FIFS) an die Videosteuereinrichtung (VS2) übertragen wird,
- **dass** durch das Steuersignal (FIFS) an der Videosteuereinrichtung (VS2) eine Bildfolge des Videosignals (VSK2) beeinflusst wird,
- **dass** durch die beeinflusste Bildfolge beim zweiten Videoencoder (VE2) eine Bildung des neuen I-Frame (NI-Frame) erzwungen wird, und
- **dass** der neue I-Frame (NI-Frame) über den kontinuierlichen Datenstrom (VDSA) zum Teilnehmerendgerät (TN) gelangt.

4. Verfahren nach Anspruch 1, **dadurch gekennzeichnet,**
- **dass** in einem Pufferspeicher (PS) des Streamingserver (SS) ein zuletzt übertragener I-Frame sowie nachfolgende P-Frame, die durch den zweiten Videoencoder (VE2) an den Streamingserver (SS) übertragen wurden, entweder direkt oder als Vollbild (VB) zwischengespeichert werden,
- **dass** durch das Steuersignal (KUS) aus den zwischengespeicherten I-Frame und P-Frame bzw. aus dem zwischengespeicherten Vollbild (VB) ein neuer I-Frame (NI-Frame) gebildet wird, der über den kontinuierlichen Datenstrom (VDSA) zum Teilnehmerendgerät (TN) gelangt.
